# EUROPEAN PATENT SPECIFICATION

(11) **EP 3 378 218 B1**
(45) Date of publication and mention of the grant of the patent: **22.07.2020**
(21) Application number: 16809546.1
(22) Date of filing: 18.11.2016
(51) Int. Cl.: H04W 4/02, H04L 29/06, H04W 12/06, H04L 29/08

(54) **COMMUNICATION BETWEEN AN ELECTRONIC PORTABLE DEVICE AND A SMART WATCH**
KOMMUNIKATION ZWISCHEN EINER ELEKTRONISCHEN TRAGBAREN VORRICHTUNG UND EINER INTELLIGENTEN UHR
COMMUNICATION ENTRE UN DISPOSITIF PORTATIF ÉLECTRONIQUE ET UNE MONTRE INTELLIGENTE

(30) Priority: 20.11.2015 NL 2015832
(43) Date of publication of application: 26.09.2018
(73) Proprietor: Intellectueel Eigendom Beheer B.V., 2201 JA Noordwijk (NL)
(72) Inventor: MOONEN, David Jozef Henri, 2201 JA Noordwijk (NL)
(74) Representative: V.O.
(86) International application number: PCT/NL2016/050807
(87) International publication number: WO 2017/086790

(56) References cited:
- US-A1- 2014 282 877
- US-A1- 2015 074 800
- US-A1- 2015 121 496

## Description

The invention relates to a wireless communication method.

Wireless communication methods are applied for providing communication between persons, e.g. in local areas where communication is vital for security reasons such as on navy vessels.

It is noted that patent publication US 2015/0121496 discloses systems and methods for remote authentication using mobile single sign on credentials. It is further noted that patent publication US 2014/0282877 discloses a mobile communication device having an enhanced security and convenience based on a separate key device. It is also noted that patent publication US 2015/0074800 discloses a method of providing a user with an option to access a protected system by satisfying a reduced security measure.

The invention aims at providing a wireless communication method having additional functionality. The invention is specified by the method, system, and computer program product of the independent claims.

By monitoring a short range wireless connection between a portable device and an associated smart watch worn by the user of the portable device, and by generating a monitoring signal responsive to the outcome of the monitoring step, it can be monitored whether the user that has operated the portable device is still in proximity of said portable device. Proximity information of the portable device user can be used for different purposes, including emergency procedures and/or discontinuity of function authorization related communication tasks that are controlled by the portable device.

Other advantageous embodiments according to the invention are described in the following claims.

By way of example only, embodiments of the present invention will now be described with reference to the accompanying figures in which
Fig. 1 shows a schematic view of a wireless communication system according to the invention, and
Fig. 2 shows a flow chart of an embodiment of a method according to the invention.

The figures merely illustrate a preferred embodiment according to the invention. In the figures, the same reference numbers refer to equal or corresponding parts.

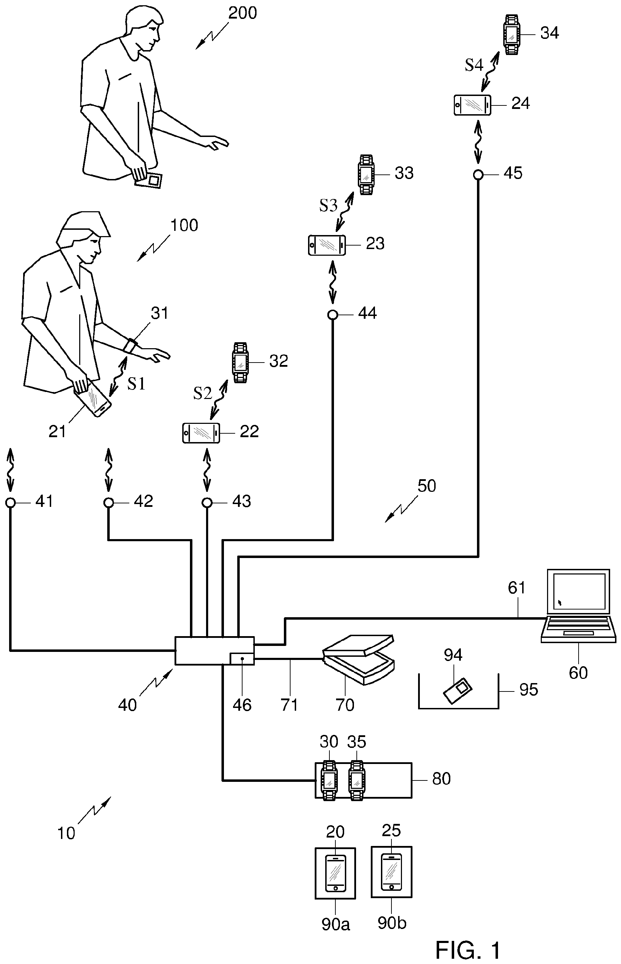

Figure 1 shows a schematic view of a wireless communication system 10 according to the invention that can be used in local areas where security is a specific issue, such as a navy vessel, an airforce / army base, a commercial airline plane or a public festival location. The system 10 comprises a multiple number of portable electronic communication devices 20-25 that can be activated individually. Further, the system comprises a multiple number of smart watches 30-35 operatively worn by users 100 of the activated electronic portable communication devices 20-25. In addition, the system 10 comprises a server 40 and a communication network 50 connected to the server.

During operation, the server 40 is operatively connected to activated electronic portable communication devices 21-24, also called portable devices, via wireless communication channels for performing a data processing step on data transmitted by said portable devices 21-24. The communication network 40 includes access terminals 41-45 for wireless communication with activated portable electronic communication devices 21-24.

Further, the system 10 shown in Fig. 1 includes a stationary communication device 60 and a wired connection 61 interconnecting the stationary communication device 60 to the server 40 for providing a wired communication channel so that the stationary device 60 can be used permanently, e.g. for internal communication sessions. The system 10 also includes a scanner 70 connected to the server 40 via the connection 71 for scanning personalized smart cards 94. In addition, the system 10 comprises a smart watch storing terminal 80 and electronic portable communication device storing terminals 90a,b. Said storing terminals 80, 90a,b can be used for storing smart watches 30-35 and electronic portable communication devices 20-25, preferably also for charging smart watches and electronic portable communication devices. Thereto, in the shown embodiment of Fig. 1 the smart watch storing terminal 80 is connected to the server for charging the smart watches. However, the storing terminals 80, 90a,b can be connected to another devices providing power for charging. Further, in a more simple implementation, the storing terminals 80, 90a,b are not provided with charging features. The system 10 may also include a box 95 for storing smart cards as described below.

Generally, the server 40 of the system is provided with a private branch exchange PBX 46 for supporting telephone calls as described below. The data processing process performed by the server 40 on data transmitted by the electronic portable communication devices 21-24 may include controlling a user status of said portable communication devices 21-24, e.g. for generating data immediately accessible upon the occurrence of a calamity event in the local area where the wireless communication system 10 is provided. Further, the data processing process may include performing communication tasks that are related to a function authorization of a person using a connected portable communication device 21-24, such as voice, audio, video, messaging, information requests and/or commands.

During operation of the system 10, a user 100 using an activated electronic portable communication devices 21-24 such as a smartphone, a phablet or a small or medium sized tablet also wears a smart watch 31-34 that is communicatively connected to the portable communication device 21-24 via a short range wireless connection S1-S4. The system 10 is arranged for monitoring the short range wireless connection S1-S4 between the activated portable electronic communication device 21-24, also called portable device, and the smart watch 31-34 for generating a monitoring signal in the system 10 interacting with the data processing step performed in the server 40.

By monitoring a short range wireless connection S1-S4 between a portable device 21-24 and an associated smart watch 31-34 worn by the user of the portable device, and by generating a monitoring signal responsive to the outcome of the monitoring step, it can be monitored whether the user that has operated the portable device is still in proximity of said portable device. Proximity information of the portable device user can be used for different purposes, including emergency procedures and/or discontinuity of function authorization related communication tasks that are controlled by the portable device.

The monitoring signal may be generated depending on the outcome of the monitoring step. As an example, the monitoring signal may be generated if the monitoring step reveals that the short range wireless connection S1-S4 is in a regular state. As another example, the monitoring signal may be generated if the monitoring step reveals that the short range wireless connection is in an irregular state, e.g. if the connection is inactive.

Preferably, the step of monitoring the short range wireless connection includes checking whether the distance between the activated electronic portable communication device 21-24 and the smart watch 31-34 is larger than a predetermined distance. Then, it is monitored whether the portable device 21-24 is still in the proximity of the user. Alternatively or additionally it is checked whether the short range wireless connection is still active.

If the monitoring step has a negative outcome, e.g. when the portable device 21-24 has been left somewhere or has been given to another person, the monitoring signal may include an alarm signal so that the system 10 may initiate further steps, e.g. blocking processes performing function authorization related communication tasks..

The monitoring step may be implemented by performing a substep of transmitting, by the server 40, a request message to at least a number of activated electronic portable communication devices 21-24, requesting status information of the respective short range wireless connection S1-S4, and a substep of transmitting, by the communication devices 21-24, responding messages to the server 40 including said status information. The request message can be transmitted simultaneously to the portable devices, or sequentially, e.g. periodically or upon request by an operator operating the server 40. In this manner, the monitoring step is initiated by the server 40. However, in another implementation the monitoring step is initiated by the portable communication device 21-24 or by the corresponding smart watch 31-34. Generally, the portable communication device 21-24 may control the short range wireless connection S1-S4 with the associated smart watch 31-34. Otherwise said smart watch 31-34 controls the short range wireless connection S1-S4.

The smart watch 31-34 connected to the portable communication device 21-24 may be associated with a user profile, e.g. a user name, of the person using the portable communication device 21-24. Then, the user 100 may transmit commands to the server 40, via the portable communication device 21-24, for performing communication tasks that are related to a function authorization of said user profile. As an example, a navigation officer 100 may transmit commands for controlling an actual moving direction of the navy vessel.

Advantageously, the server 40 may be blocked to perform function authorization related communication tasks if the monitoring step has a negative outcome, thereby preventing that the portable communication device 21-24 is used in an unauthorized way, e.g. by person finding the portable communication device 21-24 that has been left by the person having said function authorization. Here, the server 40 can be blocked by the generated monitoring signal in the server 40.

A user 100 may have access to a basic functionality of an activated portable communication device 21-24 after the server has validated an authentication process of said user 100. Said authentication process may include scanning, by the scanner 70 connected to the server 40, a personalized smart card 94 of the user 100, e.g. upon entering the local area where the system 10 is provided. As an example, the scanning process is performed at the gangway of a navy vessel. Depending on a readiness state, the scanning process can be performed by either the user 100 or a guard 200. By storing the personalized smart card 94 in the box 95 the presence of said user 100 in the local area can be monitored physically and is immediately visible for inspection, e.g. in case of emergency, also in case of a electricity failure. Typically, the scanning result is compared with identity information of users 100 that are authorized to use the system 10. If the comparison result is positive, said user 100 of said smart card 94 may be allowed to use the portable communication devices 21-24 of the system 10. Preferably, the authentication process also includes a local authentication procedure performed by the user 100 on the portable communication device 21-24 so that it may be verified that an authorized user of a scanned smart card 94 requests access to the server 40 via said portable communication device 21-24. The local authentication process may include entering a username and a password to the portable communication device 21-24. Alternatively or additionally, other authentication procedures can be implemented including verifying other knowledge-based authentication factors "something else you know" KAF and/or verifying biometric authentication factors "something your are" BAF such as fingerprint or iris recognition.

After successful authentication, a user 100 may have access to a basic functionality of a portable communication device. In an advantageous embodiment, the personalized smart card 94 is dispensed in the box 95. Consequently, when said user is admitted in the local area, the user does not possess the smart card 94, a so-called PAF-NOT principle. Similarly, when the user 100 leaves the local area, again an authentication process is performed, e.g. using the smart watch. Then, said user 100 receives the smart card 94 back again. Therefore, the smart cards stored in the box 95 belong to users that are present in the local area, serving as a presence monitoring system.

It is noted that, in principle, the authentication process may also be performed without a scanning process. As an example, only a local authentication procedure can be performed to check whether a person is allowed to use the system 10, thus without checking whether said person is present in the local area where the system 10 is provided. Further, instead of performing a step of scanning a personalized smart card, other so-called physical authentication factors "something you have" PAF can be verified, e.g. including data from security token that is possessed by said person.

The basic functionality of an activated portable device 21-24 may include initiating and conducting telephone calls. Further, the basic functionality may include additional features such as access to Internet and/or data of the local area where the system 10 is provided.

In an advantageous embodiment, the user 100 of a portable communication device 21-24 has access to function authorization related communication tasks if the step of monitoring the short range wireless connection of the portable communication device 21-24 and the smart watch 31-34 has a positive outcome. As an example, a navigation officer may transmit commands for controlling an actual moving direction of a navy vessel, via the portable communication device 21-24 and the server 40. A short range wireless connection S1-S4 between the activated portable communication device 21-24 and the associated smart watch 31-34 may be established when brought in proximity if the identity associated with the smart watch 31-34 matches with the identity of the scanned smart card 94, then forming an associated portable device / smart watch pair. A process of verifying a potential match between smart watch identity and smart card identity can be performed by the server 40, using identification keys preferably stored in the server 40.

The short range wireless connection can be implemented using various techniques, e.g. Wifi, BT or NFC.

In practice, a person entering the local area may offer his or her personalized smart card 94 for scanning by the scanner 70 and storing in the box 95. Then, the person takes his or her personalized smart watch 31-34 from the smart watch terminal 80 having an identity matching with the smart card identity and wears said smart watch 31-34 on the body. Further, the person takes a portable device 20-25 from an electronic portable communication device terminal 90a,b, located e.g. in his/her private cabin, activates said device 21-24 to get access to basic functionality and performs an authentication process on the portable device 21-24 to get access to function authorization related communication tasks.

Optionally, the portable device 21-24 and/or the connected smart watch 31-34 includes a pressure sensor for comparing a local pressure level signal with a central pressure level signal. By locally measuring pressure the user of said portable device 21-24 and/or said smart watch 31-34 may have specific advantages, especially when the local area where the system is arranged is a navy vessel. When the vessel enters a hazardous environment or when a nuclear, biological or chemical threat is to be expected crew members can be protected by staying in a ships compartment with overpressure, i.e. where the local pressure is higher than the atmospheric pressure. By monitoring the local pressure value and comparing the measured value with an actual atmospheric pressure it can be determined whether or not it is safe to stay in the ships compartment. Further, a local pressure measurement might help in localizing the user of the portable device and/or the connected smart watch, especially for determining the height level of the user's position.

For the purpose of localizing a person using the portable device 21-24 signal strengths of wireless signals transmitted by said portable device 21-24 and received at a single or a multiple number of access terminals 41-45 as well as signal strengths of wireless signals transmitted by said access terminals and received by the portable device itself can be analyzed, e.g. for finding a buddy crew member of a navy ship.

It is noted that the server 40 might be arranged for transmission of an alert signal to a pre-defined communication device response to the generated monitoring signal. As an example, a message can be sent to an officer when it is monitored that the short range wireless connection of a portable device 21-24 and an associated smart watch 31-34 of another responsible officer is abnormal or lost so that said responsible officer might not be able to perform function authorization related communication tasks on a real time basis because he or she might not have immediate access to said tasks or information.

In a preferred embodiment, the server is arranged for collecting disconnection data of portable electronic communication device and smart watch pairs and transmitting said data to another unit for further processing. In a highly preferred embodiment, said data is time-related and associated with user information such as crew member initials. As an example, the system retrieves and stores smartphone disconnect information, e.g. for all open deck locations. This time-related disconnect information is collected and transmitted to an Integrated Bridge System IBS together with user information e.g. crewmember initials. The IBS will advantageously be using the same time settings as the system 10 does. e.g. zulu time. The system information can be provided to for example an IBS subsystem called Electronic Chart Display & Information System ECDIS. In this way ECDIS can plot the Man Over Board location MOB-location in the navigational chart or nautical chart automatically when receiving the system information. This plotted information can visually be presented to a crewmember on duty using the IBS. For example this crewmember can be the officer of the watch. This crewmember will use the presented plot-information to confirm the MOB situation and navigate to the actual MOB-location e.g. performing the Williamson turn.

Advantageously, the portable device 21-24 is arranged for receiving a message from the server 40 and transmitting said message towards the connected smart watch 31-34. As an example, a message including a local time zone adjustment can thus be forwarded to the smart watch for display to the user.

In a specific embodiment, a smart watch 30-35 is arranged for direct communication with the server 40 bypassing the associated portable device 20-25. Preferably, the layout of the smartwatch time-screen changes when switching in a mode of direct communication with the server. More generally, the layout of the smartwatch time-screen may change when the smartwatch or system switches to another readiness state. By providing a wireless communication channel between the smart watch and access terminals 41-45 of the system 10, the server might directly communicate with the smart watch. Advantageously, the direct communication is realized only when it is desired to arrange such direction communication channel, e.g. when a secure and immediate communication is requested, more generally when function authorization related communication tasks, such as voice, audio, video, messaging, information requests and/or commands, have to be performed. Here, the user of the portable device 21-24 uses the smart watch 31-34 for direct communication with the server 40.. When a communication with less priority or less security is requested, the portable device can be used for communication with the server, thus saving electric power of the smart watch 31-34. As an example, non-authorized communication tasks, such as private voice and messaging, can be performed via the wireless communication between the server and the portable electronic communication device.

In another specific embodiment, the portable device 21-24 and/or the connected smart watch 31-34 is arranged for measuring a single or a multiple number of physiological parameters of the person wearing the smart watch, for forwarding physiological data to the server 40, e.g. for status monitoring tasks.

As described referring to Fig. 1, the shown system 10 is provided with a stationary communication device 60 connected to the server 40 via a wired communication channel 61. Typically, a user of the stationary communication device has access to function authorization related communication tasks after performing a local authentication process for a local stationary session, similar to an authentication process that is to be performed when using a portable device 20-25 as described above. Here, a user transfers a presence status to the stationary communication device after performing the local authentication process for a local stationary session on said stationary communication device. Advantageously, when the user of the stationary communication device 60 also uses a portable device 21-24, an authorization priority is controlled by the server 40, such that access to function authorization related communication tasks is then only possible via the stationary communication device 60. Access to function authorization related communication tasks via the portable device 21-24 is then only possible after terminating the local stationary sessions on the stationary communication device 60. Here, a user receives the presence status back on the portable device after terminating the local stationary session.

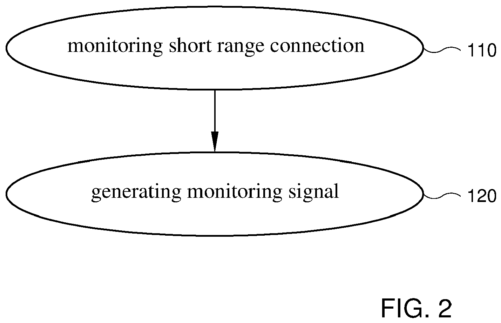

Figure 2 shows a flow chart of an embodiment of a method according to the invention. The method is used for providing wireless communication, wherein a multiple number of activated electronic portable communication devices are operatively connected to a server via wireless communication channels for performing a data processing process on data transmitted by said devices. The method comprises a step of monitoring 110 a short range wireless connection between an activated electronic portable communication device and a smart watch worn by a person using said communication device, and a step of generating 120, responsive to the monitoring step, a monitoring signal in the server interacting with the data processing process.

The method of providing wireless communication can be performed using dedicated hardware structures, such as computer servers. Otherwise, the method can also at least partially be performed using a computer program product comprising instructions for causing a processor of a computer system or a control unit to perform a process including at least one of the method steps defined above. All (sub)steps can in principle be performed on a single processor. However, it is noted that at least one step can be performed on a separate processor, e.g. the step of generating a monitoring signal. A processor can be loaded with a specific software module. Dedicated software modules can be provided, e.g. from the Internet.

The invention is not restricted to the embodiments described herein. It will be understood that many variants are possible.

It is noted that the wireless communication system can be of a closed type so that only authorized portable devices have access to the server. However, on the other hand, the portable devices may have access to other telecommunication systems, e.g. a public switched telephone network or another PBX or PABX. Then, a user of a portable device may have access to a public telephone network when leaving the local area where the system according to the invention is provided.

It is further noted that a wired connection may include wireless connections interconnecting wired connection section or sections.

It is also noted that the server typically includes a single or a multiple number of processors for performing various tasks. Further, the server may include a single module or may be distributed including a multiple number of servers modules composing the server.

These and other embodiments will be apparent for the person skilled in the art and are considered to fall within the scope of the invention as defined in the following claims. For the purpose of clarity and a concise description features are described herein as part of the same or separate embodiments. However, it will be appreciated that the scope of the invention may include embodiments having combinations of all or some of the features described.

## Claims

1. A communication method, wherein a multiple number of activated electronic portable communication devices (21-24) are operatively connected to a server (40) via wireless communication channels, the server performing a data processing process on data transmitted by said devices (21-24), the method comprising the steps of:
- monitoring a short range wireless connection (S1-S4) between an activated electronic portable communication device (21-24) and a smart watch (31-34) worn by a person (100) using said communication device (21-24), and
- generating, responsive to the monitoring step, a monitoring signal in the server (40), the monitoring signal interacting with the data processing process,
wherein the step of monitoring the short range wireless connection (S1-S4) includes checking whether the distance between the activated electronic portable communication device (21-25) and the smart watch (31-34) is larger than a predetermined distance, wherein the outcome of the monitoring step is negative if the communication device is not in the proximity of the person wearing the smart watch;
wherein the method further includes an authentication process including scanning a personalized smart card (94), and
wherein a short range wireless connection (S1-S4) between an activated communication device (21-24) and a smart watch (31-34) is established when brought in proximity if an identity associated with said smart watch (31-35) matches with the identity of said smart card (94).

2. A method according to claim 1, wherein the monitoring signal includes an alarm signal if the monitoring step has a negative outcome.

3. A method according to any of the preceding claims, wherein the monitoring step includes the substeps of:
- transmitting, by the server, a request message to at least a number of activated electronic portable communication devices, requesting status information of the respective short range wireless connection, and
- transmitting, by the communication devices, responding messages to the server including said status information.

4. A method according to any of the preceding claims, wherein the data processing process includes controlling a user status of the communication device.

5. A method according to any of the preceding claims, wherein the communication device controls the short range wireless connection with the associated smart watch worn by the person using said communication device.

6. A method according to any of the preceding claims, wherein the data processing process includes performing communication tasks related to a function authorization of a user profile associated with the smart watch connected to the electronic portable communication device.

7. A method according to any of the preceding claims, wherein the server is blocked to perform function authorization related communication tasks if the monitoring step has a negative outcome, and/or wherein a user of an activated electronic portable communication device has access to function authorization related communication tasks if the monitoring step has a positive outcome.

8. A method according to any of the preceding claims, wherein a user of an activated electronic portable communication device has access to a basic functionality after the server has validated an authentication process of the user.

9. A wireless communication system (10), comprising
- a multiple number of portable electronic communication devices (21-24) that can be activated individually,
- a multiple number of smart watches (31-34) operatively worn by users of the activated electronic portable communication devices (21-24),
- a server (40) configured to be operatively connected to activated electronic portable communication devices via wireless communication channels for performing a data processing step on data transmitted by said devices (21-24),
- a communication network (50) connected to the server (40) and including access terminals (41-45) for wireless communication with activated portable electronic communication devices (21-24),
wherein an activated portable electronic communication device (21-24) is configured to be operatively connected to an individual smart watch (31-34) worn by the user (100) via a short range wireless connection (S1-S4) channel, and
wherein the system (10) is arranged for monitoring the short range wireless connection (S1-S4) between said activated portable electronic communication device (21-24) and said smart watch (31-34) for generating a monitoring signal in the server (40), the monitoring signal interacting with the data processing step performed in the server (40),
wherein the step of monitoring the short range wireless connection (S1-S4) includes checking whether the distance between the activated electronic portable communication device (21-24) and the smart watch (31-34) is larger than a predetermined distance, wherein the outcome of the monitoring step is negative if the communication device is not in the proximity of the person wearing the smart watch;
wherein the system (10) is further arranged for performing an authentication process including scanning a personalized smart card (94), and
wherein an activated communication device (21-24) and a smart watch (31-35) are arranged for establishing a short range wireless connection therebetween when brought in proximity if an identity associated with said smart watch (31-34) matches with the identity of said smart card (94).

10. A system according to claim 9, wherein the portable electronic communication device and/or the connected smart watch includes a pressure sensor for comparing a local pressure level signal with a central pressure level signal, and/or
wherein the server is arranged for collecting disconnection data of portable electronic communication device and smart watch pairs and transmitting said data to another unit for further processing.

11. A system according to any of the preceding claims 9-10, wherein the portable electronic communication device is arranged for transmitting a message received from the server towards the connected smart watch.

12. A system according to any of the preceding claims 9-10, wherein a smart watch is arranged for direct communication with the server bypassing the portable electronic communication device.

13. A system according to claim 12, wherein the direct communication between the server and the smart watch is used to perform function authorization related communication tasks.

14. A system according to claim 13, wherein non-authorized communication tasks, such as private voice and messaging, are performed via the wireless communication between the server and the portable electronic communication device.

15. A computer program product comprising instructions which, when executed by the system according to any the claims 9-14, cause the system to carry out the method of any of claims 1-8;
wherein the system comprises a multiple number of portable electronic communication devices, a multiple number of smart watches, a server, and a communication network.

## Patentansprüche

1. Kommunikationsverfahren, wobei mehrere aktivierte elektronische tragbare Kommunikationsvorrichtungen (21-24) über drahtlose Kommunikationskanäle operativ mit einem Server (40) verbunden sind, wobei der Server einen Datenverarbeitungsprozess für von den Vorrichtungen (21-24) übertragene Daten durchführt, wobei das Verfahren die Schritte umfasst:
- Überwachen einer drahtlosen Verbindung mit kurzer Reichweite (S1-S4) zwischen einer aktivierten elektronischen tragbaren Kommunikationsvorrichtung (21-24) und einer Smartwatch (31-34), die von einer Person (100) getragen wird, die die Kommunikationsvorrichtung (21-24) verwendet; und
- Erzeugen eines Überwachungssignals im Server (40) als Reaktion auf den Überwachungsschritt, wobei das Überwachungssignal mit dem Datenverarbeitungsprozess interagiert;
wobei der Schritt des Überwachens der drahtlosen Verbindung mit kurzer Reichweite (S1-S4) das Überprüfen einschließt, ob der Abstand zwischen der aktivierten elektronischen tragbaren Kommunikationsvorrichtung (21-25) und der Smartwatch (31-34) größer als ein vorbestimmter Abstand ist, wobei das Ergebnis des Überwachungsschritts negativ ist, wenn sich die Kommunikationsvorrichtung nicht in der Nähe der Person befindet, die die Smartwatch trägt;
wobei das Verfahren ferner einen Authentifizierungsprozess einschließt, der das Scannen einer personalisierten Chipkarte (94) einschließt, und
wobei eine drahtlose Verbindung mit kurzer Reichweite (S1-S4) zwischen einer aktivierten Kommunikationsvorrichtung (21-24) und einer Smartwatch (31-34) hergestellt wird, wenn sie in die Nähe gebracht wird, wenn eine der Smartwatch (31-35) zugeordnete Identität mit der Identität der Chipkarte (94) übereinstimmt.

2. Verfahren nach Anspruch 1, wobei das Überwachungssignal ein Alarmsignal einschließt, wenn der Überwachungsschritt ein negatives Ergebnis hat.

3. Verfahren nach einem der vorhergehenden Ansprüche, wobei der Überwachungsschritt die folgenden Teilschritte einschließt:
- Übertragen einer Anforderungsnachricht durch den Server an wenigstens eine Anzahl aktivierter elektronischer tragbarer Kommunikationsvorrichtungen, Anfordern von Statusinformationen der jeweiligen drahtlosen Verbindung mit kurzer Reichweite, und
- Übertragen von Antwortnachrichten an den Server einschließlich der Statusinformationen durch die Kommunikationsvorrichtungen.

4. Verfahren nach einem der vorhergehenden Ansprüche, wobei der Datenverarbeitungsprozess das Steuern eines Benutzerstatus der Kommunikationsvorrichtung einschließt.

5. Verfahren nach einem der vorhergehenden Ansprüche, wobei die Kommunikationsvorrichtung die drahtlose Verbindung mit kurzer Reichweite mit der zugeordneten Smartwatch steuert, die von der Person getragen wird, die die Kommunikationsvorrichtung verwendet.

6. Verfahren nach einem der vorhergehenden Ansprüche, wobei der Datenverarbeitungsprozess das Durchführen von Kommunikationsaufgaben einschließt, die sich auf eine Funktionsautorisierung eines Benutzerprofils beziehen, das der mit der elektronischen tragbaren Kommunikationsvorrichtung verbundenen Smartwatch zugeordnet ist.

7. Verfahren nach einem der vorhergehenden Ansprüche, wobei der Server im Durchführen funktionsautorisierungsbezogener Kommunikationsaufgaben blockiert ist, wenn der Überwachungsschritt ein negatives Ergebnis hat, und/oder wobei ein Benutzer einer aktivierten elektronischen tragbaren Kommunikationsvorrichtung Zugriff auf funktionsautorisierungsbezogene Kommunikationsaufgaben hat, wenn der Überwachungsschritt ein positives Ergebnis hat.

8. Verfahren nach einem der vorhergehenden Ansprüche, wobei ein Benutzer einer aktivierten elektronischen tragbaren Kommunikationsvorrichtung Zugriff auf eine Grundfunktionalität hat, nachdem der Server einen Authentifizierungsprozess des Benutzers validiert hat.

9. Drahtloses Kommunikationssystem (10), umfassend
- mehrere tragbare elektronische Kommunikationsvorrichtungen (21-24), die einzeln aktiviert werden können,
- mehrere Smartwatches (31-34), die von Benutzern der aktivierten elektronischen tragbaren Kommunikationsvorrichtungen (21-24) operativ getragen werden;
- einen Server (40), der dazu ausgelegt ist, über drahtlose Kommunikationskanäle operativ mit aktivierten elektronischen tragbaren Kommunikationsvorrichtungen verbunden zu werden, um einen Datenverarbeitungsschritt für von diesen Vorrichtungen übertragene Daten (21-24) durchzuführen;
- ein Kommunikationsnetz (50), das mit dem Server (40) verbunden ist und Zutrittsterminals (41-45) für die drahtlose Kommunikation mit aktivierten tragbaren elektronischen Kommunikationsvorrichtungen (21-24) einschließt; wobei eine aktivierte tragbare elektronische Kommunikationsvorrichtung (21-24) dazu ausgelegt ist, mit einer einzelnen Smartwatch (31-34) operativ verbunden zu sein, die vom Benutzer (100) über eine drahtlose Verbindung mit kurzer Reichweite (S1-S4) getragen wird, und
wobei das System (10) zum Überwachen der drahtlosen Verbindung mit kurzer Reichweite (S1-S4) zwischen der aktivierten tragbaren elektronischen Kommunikationsvorrichtung (21-24) und der Smartwatch (31-34) angeordnet ist, um ein Überwachungssignal im Server (40) zu erzeugen, wobei das Überwachungssignal, mit dem in dem Server (40) durchgeführten Datenverarbeitungsschritt interagiert,
wobei der Schritt des Überwachens der drahtlosen Verbindung mit kurzer Reichweite (S1-S4) das Überprüfen einschließt, ob der Abstand zwischen der aktivierten elektronischen tragbaren Kommunikationsvorrichtung (21-24) und der Smartwatch (31-34) größer als ein vorbestimmter Abstand ist, wobei das Ergebnis des Überwachungsschritts negativ ist, wenn sich die Kommunikationsvorrichtung nicht in der Nähe der Person befindet, die die Smartwatch trägt;
wobei das System (10) ferner angeordnet ist, um einen Authentifizierungsprozess durchzuführen, der das Scannen einer personalisierten Chipkarte (94) einschließt, und
wobei eine aktivierte Kommunikationsvorrichtung (21-24) und eine Smartwatch (31-35) angeordnet sind, um eine drahtlose Verbindung mit kurzer Reichweite zwischen ihnen herzustellen, wenn sie in die Nähe gebracht werden, wenn eine Identität, die der Smartwatch (31-34) zugeordnet ist, mit der Identität der Chipkarte (94) übereinstimmt.

10. System nach Anspruch 9, wobei die tragbare elektronische Kommunikationsvorrichtung und/oder die angeschlossene Smartwatch einen Drucksensor zum Vergleichen eines lokalen Druckpegelsignals mit einem zentralen Druckpegelsignal einschließt, und/oder
wobei der Server angeordnet ist, um Trennungsdaten von Paaren von tragbaren elektronischen Kommunikationsvorrichtungen und Smartwatches zu sammeln und diese Daten zur weiteren Verarbeitung an eine andere Einheit zu übertragen.

11. System nach einem der vorhergehenden Ansprüche 9 bis 10, wobei die tragbare elektronische Kommunikationsvorrichtung zum Übertragen einer vom Server empfangenen Nachricht an die verbundene Smartwatch angeordnet ist.

12. System nach einem der vorhergehenden Ansprüche 9 bis 10, wobei eine Smartwatch zur direkten Kommunikation mit dem Server angeordnet ist, wobei die tragbare elektronische Kommunikationsvorrichtung umgangen wird.

13. System nach Anspruch 12, wobei die direkte Kommunikation zwischen dem Server und der Smartwatch verwendet wird, um funktionsautorisierungsbezogene Kommunikationsaufgaben durchzuführen.

14. System nach Anspruch 13, wobei nicht autorisierte Kommunikationsaufgaben, wie private Sprach- und Nachrichtenübermittlung, über die drahtlose Kommunikation zwischen dem Server und der tragbaren elektronischen Kommunikationsvorrichtung ausgeführt werden.

15. Computerprogrammprodukt, umfassend Anweisungen, die, wenn sie von dem System nach einem der Ansprüche 9 bis 14 ausgeführt werden, bewirken, dass das System das Verfahren eines der Ansprüche 1 bis 8 durchführt;
wobei das System mehrere tragbare elektronische Kommunikationsvorrichtungen, mehrere Smartwatches, einen Server und ein Kommunikationsnetz umfasst.

## Revendications

1. Procédé de communication, dans lequel de multiples dispositifs de communication électroniques portables activés (21-24) sont connectés fonctionnellement à un serveur (40) par l'intermédiaire de canaux de communication sans fil, le serveur accomplissant un processus de traitement de données sur des données transmises par lesdits dispositifs (21-24), le procédé comprenant les étapes :
- de surveillance d'une connexion sans fil à courte portée (S1-S4) entre un dispositif de communication électronique portable activé (21-24) et une montre intelligente (31-34) portée par une personne (100) utilisant ledit dispositif de communication (21-24), et
- de génération, en réponse à l'étape de surveillance, d'un signal de surveillance dans le serveur (40), le signal de surveillance interagissant avec le processus de traitement de données,
dans lequel l'étape de surveillance de la connexion sans fil à courte portée (S1-S4) inclut le fait de vérifier si la distance entre le dispositif de communication électronique portable activé (21-25) et la montre intelligente (31-34) est supérieure à une distance prédéterminée, le résultat de l'étape de surveillance étant négatif si le dispositif de communication n'est pas à proximité de la personne portant la montre intelligente ;
le procédé incluant en outre un processus d'authentification incluant la lecture d'une carte à puce personnalisée (94), et
dans lequel une connexion sans fil à courte portée (S1-S4) entre un dispositif de communication activé (21-24) et une montre intelligente (31-34) est établie lorsqu'ils sont amenés à proximité si une identité associée à ladite montre intelligente (31-35) correspond à l'identité de ladite carte à puce (94).

2. Procédé selon la revendication 1, dans lequel le signal de surveillance inclut un signal d'alarme si l'étape de surveillance a un résultat négatif.

3. Procédé selon l'une quelconque des revendications précédentes, dans lequel l'étape de surveillance inclut les sous-étapes :
- de transmission, par le serveur, d'un message de demande à au moins un certain nombre de dispositifs de communication électroniques portables activés, demandant des informations de statut de la connexion sans fil à courte portée respective, et
- de transmission, par les dispositifs de communication, de messages de réponse au serveur incluant lesdites informations de statut.

4. Procédé selon l'une quelconque des revendications précédentes, dans lequel le processus de traitement de données inclut la commande d'un statut d'utilisateur du dispositif de communication.

5. Procédé selon l'une quelconque des revendications précédentes, dans lequel le dispositif de communication commande la connexion sans fil à courte portée avec la montre intelligente associée portée par la personne utilisant ledit dispositif de communication.

6. Procédé selon l'une quelconque des revendications précédentes, dans lequel le processus de traitement de données inclut l'accomplissement de tâches de communication relatives à une autorisation de fonction d'un profil d'utilisateur associé à la montre intelligente connectée au dispositif de communication électronique portable.

7. Procédé selon l'une quelconque des revendications précédentes, dans lequel le serveur est empêché d'accomplir des tâches de communication relatives à une autorisation de fonction si l'étape de surveillance a un résultat négatif, et/ou dans lequel un utilisateur d'un dispositif de communication électronique portable activé a accès à des tâches de communication relatives à une autorisation de fonction si l'étape de surveillance a un résultat positif.

8. Procédé selon l'une quelconque des revendications précédentes, dans lequel un utilisateur d'un dispositif de communication électronique portable activé a accès à une fonctionnalité de base après que le serveur a validé un processus d'authentification de l'utilisateur.

9. Système de communication sans fil (10), comprenant :
- de multiples dispositifs de communication électroniques portables (21-24) qui peuvent être activés individuellement,
- de multiples montres intelligentes (31-34) portées fonctionnellement par des utilisateurs des dispositifs de communication électroniques portables activés (21-24),
- un serveur (40) configuré pour être connecté fonctionnellement à des dispositifs de communication électroniques portables activés par l'intermédiaire de canaux de communication sans fil en vue d'accomplir une étape de traitement de données sur des données transmises par lesdits dispositifs (21-24),
- un réseau de communication (50) connecté au serveur (40) et incluant des bornes d'accès (41-45) pour une communication sans fil avec des dispositifs de communication électroniques portables activés (21-24),
dans lequel un dispositif de communication électronique portable activé (21-24) est configuré pour être connecté fonctionnellement à une montre intelligente individuelle (31-34) portée par l'utilisateur (100) par l'intermédiaire d'un canal de connexion sans fil à courte portée (S1-S4), et
le système (10) étant conçu pour surveiller la connexion sans fil à courte portée (S1-S4) entre ledit dispositif de communication électronique portable activé (21-24) et ladite montre intelligente (31-34) en vue de générer un signal de surveillance dans le serveur (40), le signal de surveillance interagissant avec l'étape de traitement de données accomplie dans le serveur (40),
dans lequel l'étape de surveillance de la connexion sans fil à courte portée (S1-S4) inclut le fait de vérifier si la distance entre le dispositif de communication électronique portable activé (21-24) et la montre intelligente (31-34) est supérieure à une distance prédéterminée, le résultat de l'étape de surveillance étant négatif si le dispositif de communication n'est pas à proximité de la personne portant la montre intelligente ;
le système (10) étant en outre conçu pour accomplir un processus d'authentification incluant la lecture d'une carte à puce personnalisée (94), et
dans lequel un dispositif de communication activé (21-24) et une montre intelligente (31-35) sont conçus pour établir une connexion sans fil à courte portée entre eux lorsqu'ils sont amenés à proximité si une identité associée à ladite montre intelligente (31-34) correspond à l'identité de ladite carte à puce (94).

10. Système selon la revendication 9, dans lequel le dispositif de communication électronique portable et/ou la montre intelligente connectée incluent un capteur de pression en vue de comparer un signal de niveau de pression local à un signal de niveau de pression central, et/ou
dans lequel le serveur est conçu pour collecter des données de déconnexion de paires dispositif de communication électronique portable et montre intelligente et transmettre lesdites données à une autre unité en vue d'un traitement supplémentaire.

11. Système selon l'une quelconque des revendications 9-10 précédentes, dans lequel le dispositif de communication électronique portable est conçu pour transmettre à la montre intelligente connectée un message reçu du serveur.

12. Système selon l'une quelconque des revendications 9-10 précédentes, dans lequel une montre intelligente est conçue pour une communication directe avec le serveur contournant le dispositif de communication électronique portable.

13. Système selon la revendication 12, dans lequel la communication directe entre le serveur et la montre intelligente est utilisée pour accomplir des tâches de communication relatives à une autorisation de fonction.

14. Système selon la revendication 13, dans lequel des tâches de communication non autorisées, telles que voix et messagerie privées, sont accomplies par l'intermédiaire de la communication sans fil entre le serveur et le dispositif de communication électronique portable.

15. Produit programme informatique comprenant des instructions qui, lorsqu'elles sont exécutées par le système selon l'une quelconque des revendications 9-14, amènent le système à mettre en œuvre le procédé selon l'une quelconque des revendications 1-8 ;
dans lequel le système comprend de multiples dispositifs de communication électroniques portables, de multiples montres intelligentes, un serveur et un réseau de communication.
